(19) Europäisches Patentamt
European Patent Office
Office européen des brevets

(11) **EP 4 686 292 A1**

(12) **EUROPEAN PATENT APPLICATION**
published in accordance with Art. 153(4) EPC

(43) Date of publication:
**28.01.2026 Bulletin 2026/05**

(21) Application number: **24784143.0**

(22) Date of filing: **27.03.2024**

(51) International Patent Classification (IPC):
**H04W 72/1268** (2023.01)    **H04W 72/0453** (2023.01)
**H04W 72/23** (2023.01)

(52) Cooperative Patent Classification (CPC):
**H04W 72/0453; H04W 72/1268; H04W 72/23**

(86) International application number:
**PCT/CN2024/084173**

(87) International publication number:
**WO 2024/208058 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310417506**

(71) Applicant: **Huawei Technologies Co., Ltd.
Shenzhen, Guangdong 518129 (CN)**

(72) Inventors:
• **JIAO, Shurong
Shenzhen, Guangdong 518129 (CN)**
• **HUA, Meng
Shenzhen, Guangdong 518129 (CN)**
• **LI, Jun
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA TRANSMISSION METHOD AND APPARATUS**

(57)    This application provides a data transmission method and an apparatus. The data transmission method includes: A terminal device receives scheduling information from a network device, where the scheduling information is used to schedule the terminal device to perform data transmission on a first transmission resource, a frequency domain resource of the first transmission resource is located on an uplink subband of an activated bandwidth part BWP of the terminal device, and the BWP further includes a downlink subband neighbor to the uplink subband. The terminal device performs data transmission on the first transmission resource based on a first transmitter requirement, where the first transmitter requirement is determined based on bandwidth of the uplink subband. This application is implemented, to reduce interference caused by data transmission on the uplink subband to a neighboring downlink subband.

FIG. 3

**Description**

This application claims priority to Chinese Patent Application No. 202310417506.1, filed with the China National Intellectual Property Administration on April 7, 2023, and entitled "DATA TRANSMISSION METHOD AND APPARATUS", which is incorporated herein by reference in its entirety.

**TECHNICAL FIELD**

This application relates to the field of communication technologies, and in particular, to a data transmission method and an apparatus.

**BACKGROUND**

A bandwidth part (bandwidth part, BWP) is classified into an uplink BWP and a downlink BWP. The uplink BWP is a group of consecutive resource blocks (Resource blocks, RBs) on an uplink carrier, and the downlink BWP is a group of consecutive RBs on a downlink carrier. A plurality of uplink BWPs may be configured on one uplink carrier, and a plurality of downlink BWPs may be configured on one downlink carrier. Bandwidth of the uplink/downlink BWP is less than or equal to bandwidth of the uplink/downlink carrier. The uplink carrier is used for uplink transmission, the downlink carrier is used for downlink transmission, and a terminal device may operate on one BWP.

Currently, a transmitter requirement for uplink sending of the terminal device is designed for carrier bandwidth, and is usually classified into an in-band emission and an out-of-band emission. The in-band emission limits, in carrier transmission bandwidth, a ratio of output power on a frequency domain resource other than a frequency domain resource allocated to the terminal device to output power on the frequency domain resource allocated to the terminal device necessarily being less than or equal to a threshold preset in a protocol. The out-of-band emission limits output power on a frequency domain resource out of carrier channel bandwidth necessarily being less than or equal to another threshold preset in the protocol when the terminal device sends data on the allocated frequency domain resource.

With emergence of subband full duplex (subband full duplex, SBFD), an uplink subband and a downlink subband are allowed to exist in the BWP at the same time. The uplink subband is used for uplink transmission, and the downlink subband is used for downlink transmission. If the existing transmitter requirement is still used, when the terminal device performs uplink transmission on an uplink subband, interference caused to a downlink subband neighbor to the uplink subband is equivalent to in-band interference as the downlink subband is located in carrier transmission bandwidth for the uplink transmission. However, because allowed in-band interference is stronger than allowed out-of-band interference, strong interference may be caused to downlink subbands on two sides of the uplink subband.

**SUMMARY**

This application provides a data transmission method and an apparatus, to reduce interference caused by data transmission on an uplink subband to a neighboring downlink subband.

According to a first aspect, an embodiment of this application provides a data transmission method. The method may be performed by a terminal device, or may be performed by a component (for example, a processor, a chip, or a chip system) of the terminal device. The data transmission method may include:

The terminal device receives scheduling information from a network device, where the scheduling information is used to schedule the terminal device to perform data transmission on a first transmission resource, a frequency domain resource of the first transmission resource is located on an uplink subband of an activated bandwidth part BWP of the terminal device, and the BWP further includes a downlink subband neighbor to the uplink subband.

The terminal device performs data transmission on the first transmission resource based on a first transmitter requirement, where the first transmitter requirement is determined based on bandwidth of the uplink subband.

The method described in the first aspect is implemented, so that the first transmitter requirement is determined based on the bandwidth of the uplink subband. The downlink subband neighbor to the uplink subband is an out-of-band subband, and an allowed out-of-band interference strength is lower than an in-band interference strength. Therefore, when the terminal device sends data on a frequency domain resource of the uplink subband based on the first transmitter requirement, interference caused to the downlink subband neighbor to the uplink subband can be reduced.

In a possible implementation, the first transmitter requirement includes at least one of the following: an in-band emission, an out-of-band emission, or maximum output power reduction.

The in-band emission is used to limit a ratio of output power generated on a frequency domain resource other than the frequency domain resource of the first transmission resource in the uplink subband to output power generated on the frequency domain resource of the first transmission resource being less than or equal to a first threshold when the terminal device sends data on the first transmission resource.

The out-of-band emission is used to limit output power generated on a frequency domain resource other than the uplink subband being less than or equal to a second threshold when the terminal device sends data on the first transmission resource.

The maximum output power reduction is used to limit a maximum value of transmit power that is allowed to be reduced, when the terminal device sends data on the uplink subband, from transmit power specified by the network device.

This manner is implemented, so that because the first transmitter requirement determined based on the bandwidth of the uplink subband may include the at least one of the in-band emission, the out-of-band emission, or the maximum output power reduction, where each requirement is determined based on the bandwidth of the uplink subband, interference caused by the data transmission in the uplink subband to a neighboring downlink subband can be reduced.

In a possible implementation, the method further includes:

The terminal device sends capability information to the network device, where the capability information indicates that the terminal device supports the first transmitter requirement.

This manner is implemented, so that the terminal device reports a capability, to be specific, indicates, to the network device by using the capability information, that the terminal device supports the first transmitter requirement, to facilitate the network device performing resource scheduling.

In a possible implementation, the capability information indicates that the terminal device supports the first transmitter requirement when parameter configuration information for the data transmission meets at least one parameter configuration.

One parameter configuration in the at least one parameter configuration includes at least one of the following parameters: a waveform for the data transmission, a frequency domain resource allocation parameter for the data transmission, or bandwidth occupied by a guard subband, where the guard subband is a guard band between the uplink subband and the downlink subband in the BWP.

This manner is implemented, so that the capability information indicates that the terminal device supports the first transmitter requirement when the parameter configuration information for the data transmission meets the at least one parameter configuration, to facilitate the network device scheduling the data transmission of the terminal device.

In a possible implementation, the frequency domain resource allocation parameter includes one or more of a first parameter, a frequency domain resource position, and a quantity of frequency domain units.

The first parameter indicates whether the frequency domain resource is a consecutive frequency domain resource, the frequency domain resource position is a position of the frequency domain resource on the uplink subband, and the quantity of frequency domain units is a quantity of frequency domain units included in the frequency domain resource.

This manner is implemented, so that the frequency domain resource allocation parameter may include the one or more of the first parameter for indicating whether the frequency domain resource is the consecutive frequency domain resource, the frequency domain resource position of the frequency domain resource in the uplink subband, and the quantity of frequency domain units included in the frequency domain resource, to facilitate flexibly performing combination with another parameter, to form various parameter configurations.

In a possible implementation, the capability information includes the at least one parameter configuration.

This manner is implemented, so that the parameter configuration can be reported by using the capability information, to be specific, the terminal device supports the first transmitter requirement in the reported parameter configuration, to facilitate the network device scheduling the data transmission of the terminal device based on the parameter configuration reported by the terminal device, to cause the parameter configuration information for the data transmission to meet the at least one parameter configuration.

In a possible implementation, the scheduling information includes the parameter configuration information for the data transmission.

That the terminal device performs data transmission on the first transmission resource based on the first transmitter requirement includes:

When the parameter configuration information meets the at least one parameter configuration, the terminal device performs data transmission on the first transmission resource based on the first transmitter requirement.

This manner is implemented, so that when the parameter configuration information for the data transmission of the terminal device meets the at least one parameter configuration, the terminal device can perform data transmission on the first transmission resource based on the first transmitter requirement. Because an interference requirement is stricter when the terminal device performs data transmission based on the first transmitter requirement, the terminal device needs to improve a filter to implement a requirement of the first transmitter requirement. In the parameter configuration, interference caused when the terminal device sends the data is weaker. Therefore, complexity of improvement that needs to be performed to implement the first transmitter requirement is lower, and the implementation is easier. Therefore, in this application, when the parameter configuration information for the data transmission of the terminal device meets the at least one parameter configuration, data transmission is performed based on the first transmitter requirement, so that implementation complexity of the terminal device can be reduced.

In a possible implementation, the parameter configuration in the at least one parameter configuration corresponds to one candidate value of the first transmitter requirement. The method further includes:

The terminal device determines a first value of the first transmitter requirement based on a respective candidate value corresponding to the at least one parameter configuration that the parameter configuration information meets.

That the terminal device performs data transmission on the first transmission resource based on the first transmitter requirement includes:

The terminal device performs data transmission on the first transmission resource based on the first value of the first transmitter requirement.

This manner is implemented, so that the parameter configuration corresponds to the candidate value of the first transmitter requirement. For example, for the out-of-band emission in the first transmitter requirement, the parameter configuration may correspond to one second threshold of the out-of-band emission. When the parameter configuration information for the data transmission meets the at least one parameter configuration, the first value of the first transmitter requirement may be determined based on the respective candidate value corresponding to the at least one parameter configuration. The manner is used, so that candidate values that are of the first transmitter requirement and that correspond to various parameter configurations can be flexibly configured, thereby meeting requirements of a plurality of scenarios.

According to a second aspect, an embodiment of this application provides a data transmission method. The method may be performed by a network device, or may be performed by a component (for example, a processor, a chip, or a chip system) of the network device. The data transmission method may include:

The network device receives capability information from a terminal device, where the capability information indicates that the terminal device supports a first transmitter requirement, the first transmitter requirement is determined based on bandwidth of an uplink subband of an activated bandwidth part BWP of the terminal device, and the BWP further includes a downlink subband neighbor to the uplink subband.

The network device sends scheduling information to the terminal device based on the capability information, where the scheduling information is used to schedule the terminal device to perform data transmission on a first transmission resource, and a frequency domain resource of the first transmission resource is located on the uplink subband.

The method described in the second aspect is implemented, so that the terminal device can send the capability information to the network device, where the capability information indicates that the terminal device supports the first transmitter requirement, and the network device can flexibly schedule the data transmission of the terminal device based on the capability information.

According to a third aspect, an embodiment of this application provides a data transmission method. The method may be performed by a terminal device, or may be performed by a component (for example, a processor, a chip, or a chip system) of the terminal device. The data transmission method may include:

The terminal device sends capability information to a network device, where the capability information indicates that the terminal device supports a first transmitter requirement, the first transmitter requirement is determined based on bandwidth of an uplink subband of an activated bandwidth part BWP of the terminal device, and the BWP further includes a downlink subband neighbor to the uplink subband.

The method described in the third aspect is implemented, so that the terminal device can send the capability information to the network device, to facilitate the network device scheduling data transmission.

According to a fourth aspect, this application provides a communication apparatus. The communication apparatus includes:

a transceiver unit, configured to receive scheduling information from a network device, where the scheduling information is used to schedule a terminal device to perform data transmission on a first transmission resource, a frequency domain resource of the first transmission resource is located on an uplink subband of an activated bandwidth part BWP of the terminal device, and the BWP further includes a downlink subband neighbor to the uplink subband; and

a processing unit, configured to perform data transmission on the first transmission resource based on a first transmitter requirement, where the first transmitter requirement is determined based on bandwidth of the uplink subband.

In a possible implementation, the transceiver unit is configured to perform receiving or sending operations of the terminal device in the possible implementations of the first aspect, and the processing unit is configured to perform all operations other than the receiving and sending operations.

According to a fifth aspect, this application provides a communication apparatus. The communication apparatus includes:

a transceiver unit, configured to send capability information to a network device, where the capability information indicates that a terminal device supports a first transmitter requirement, the first transmitter requirement is determined based on bandwidth of an uplink subband of an activated bandwidth part BWP of the terminal device, and the BWP further includes a downlink subband neighbor to the uplink subband.

According to a sixth aspect, this application provides a communication apparatus. The communication apparatus includes:

a transceiver unit, configured to receive capability information from a terminal device, where the capability information indicates that the terminal device supports a first transmitter requirement, the first transmitter requirement is determined based on bandwidth of an uplink subband of an activated bandwidth part BWP of the terminal device, and the BWP further includes a downlink subband neighbor to the uplink subband; and
a processing unit, configured to send scheduling information to the terminal device based on the capability information by using the transceiver unit 1100, where the scheduling information is used to schedule the terminal device to perform data transmission on a first transmission resource, and a frequency domain resource of the first transmission resource is located on the uplink subband.

According to a seventh aspect, an embodiment of this application provides a communication apparatus. The communication apparatus includes a processor, configured to perform the method according to any possible implementation of the first aspect to the third aspect. Alternatively, the processor is configured to execute a program stored in a memory. When the program is executed, the method according to any possible implementation of the first aspect to the third aspect is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a signal or send a signal.

According to an eighth aspect, an embodiment of this application provides a communication apparatus. The communication apparatus includes a logic circuit and an interface. The logic circuit is coupled to the interface, the interface is configured to receive information, and the logic circuit is configured to perform a processing operation.

According to a ninth aspect, an embodiment of this application provides a computer-readable storage medium. The computer-readable storage medium is configured to store a computer program. When the computer program is run on a computer, the method according to any possible implementation of the first aspect to the third aspect is performed.

According to a tenth aspect, an embodiment of this application provides a computer program product. The computer program product includes a computer program or computer code. When the computer program product runs on a computer, the method according to any possible implementation of the first aspect to the third aspect is performed.

According to an eleventh aspect, an embodiment of this application provides a computer program. When the computer program is run on a computer, the method according to any possible implementation of the first aspect to the third aspect is performed.

According to a twelfth aspect, an embodiment of this application provides a wireless communication system. The wireless communication system includes a network device and a terminal device.

For technical effects achieved in the fourth aspect to the twelfth aspect, refer to the technical effects of the first aspect to the third aspect or beneficial effects in the method embodiments shown below. Details are not described herein again.

## BRIEF DESCRIPTION OF DRAWINGS

FIG. 1 is a diagram of a communication system according to an embodiment of this application;
FIG. 2a is a diagram of FDD according to an embodiment of this application;
FIG. 2b is a diagram of TDD according to an embodiment of this application;
FIG. 2c is a diagram of SBFD according to an embodiment of this application;
FIG. 2d is a diagram of a transmitter requirement determined based on carrier bandwidth according to an embodiment of this application;
FIG. 3 is a schematic flowchart of a data transmission method according to an embodiment of this application;
FIG. 4 is a diagram of determining a transmitter requirement based on bandwidth of an uplink subband according to an embodiment of this application;

FIG. 5 is a schematic flowchart of another data transmission method according to an embodiment of this application;

FIG. 6 is a schematic flowchart of still another data transmission method according to an embodiment of this application; and

FIG. 7 to FIG. 9 are diagrams of structures of communication apparatuses according to an embodiment of this application.

## DESCRIPTION OF EMBODIMENTS

To make the objectives, technical solutions, and advantages of this application clearer, this application is further described with reference to accompanying drawings.

Terms "first", "second", and the like in the specification, claims, and accompanying drawings of this application are merely used to distinguish between different objects, and are not used to describe a specific sequence. In addition, terms "include", "have", and any other variations thereof are intended to cover non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in this specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: Only A exists, only B exists, and both A and B exist, where A and B may be singular or plural. The character "/" generally indicates an "or" relationship between the associated objects. "At least one of the following items (pieces)" or a similar expression thereof means any combination of these items. For example, at least one (piece) of a, b, or c may indicate: a, b, c, "a and b", "a and c", "b and c", or "a, b, and c".

This application may be applied to protocol frameworks of a plurality of wireless communication systems. The wireless communication system may include but is not limited to a long term evolution (long term evolution, LTE) system, a new radio access technology (new radio access technology, NR) system, a future evolved communication system, and the like. The future evolved communication system is, for example, a future network or a 6th generation communication system.

This application is applicable to a plurality of mobile communication scenarios of the foregoing wireless communication system, for example, scenarios such as uplink/downlink transmission between a network device and a terminal device or point-to-point transmission between terminal devices, multi-hop/relay transmission between a network device and a terminal device, and dual connectivity (dual connectivity, DC) or multi-connectivity between a plurality of network devices and a plurality of terminal devices.

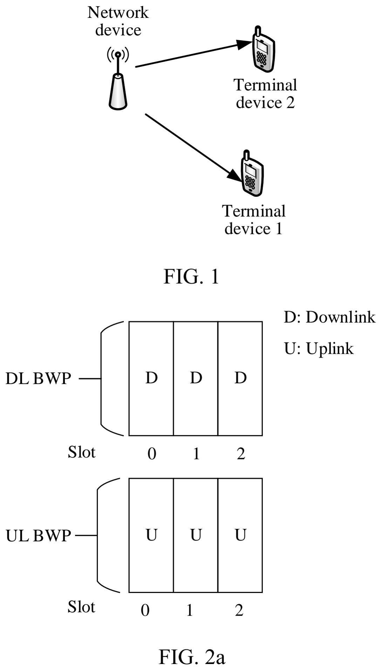

FIG. 1 is a diagram of a system architecture of a communication system according to this application. It may be understood that FIG. 1 is merely an example, and does not impose a limitation on a network architecture applicable to this application. In addition, transmission such as uplink transmission, downlink transmission, access link transmission, backhaul (backhaul) link transmission, and sidelink (sidelink) transmission is not limited in this application.

FIG. 1 is a diagram of a network architecture to which embodiments of this application are applied. The network architecture shown in FIG. 1 includes a network device, a terminal device 1, and a terminal device 2. There may be one or more network devices, and there may be one or more terminal devices.

It may be understood that quantities and forms of devices shown in FIG. 1 are used as examples, and do not constitute a limitation on this embodiment of this application. For example, in an actual application, two or more network devices may be included.

In embodiments of this application, the network device is an apparatus that is deployed in a radio access network and that provides a wireless communication function for the terminal device. The network device may include various forms of macro base stations, micro base stations (also referred to as small cells), relay stations, access points, and the like. In systems using different radio access technologies, names of the network device may be different, for example, an eNB or an eNodeB (evolved NodeB) in LTE (long term evolution, long term evolution). Alternatively, the network device may be a radio controller in a CRAN (cloud radio access network, cloud radio access network) scenario. Alternatively, the network device may be a base station device in a 5G network or a network device in a future evolved network. Alternatively, the network device may be a wearable device or a vehicle-mounted device. Alternatively, the network device may be a transmission reception point (transmission reception point, TRP). Alternatively, the network device may be a general term for all devices at a network end. For example, when a plurality of TRPs are used to perform data transmission to the terminal device, the plurality of TRPs are collectively referred to as the network device. Alternatively, the network device may be an access network device or a module of the access network device in an open access network (open RAN, ORAN) system. The network device may be a module or a unit that can implement a part of functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. In the ORAN system, the CU may also be referred to as an O-CU, the DU may also be referred to as an open (open, O)-DU, the CU-CP may also be referred to as an O-CU-CP, the CU-UP may also be referred to as an O-CU-UP, and the RU may also be referred to as an O-RU.

In embodiments of this application, the terminal device is a device having a wireless transceiver function, and is also referred to as user equipment (user equipment, UE), a mobile station (mobile station, MS), a mobile terminal (mobile terminal, MT), or the like. The terminal device is a device that provides a user with voice and/or data connectivity, and also includes a device that can perform sidelink communication, for example, a vehicle-mounted terminal, or a handheld terminal that can perform V2X communication. The terminal device may be deployed on land, including an indoor, outdoor, handheld, wearable, or vehicle-mounted device; may be deployed on water (for example, on a ship); or may be deployed in the air (for example, on a plane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, an XR device, or the like. An application scenario is not limited in embodiments of this application. The terminal device sometimes may also be referred to as a terminal, user equipment (user equipment, UE), an access terminal device, a vehicle-mounted terminal, an industrial control terminal, a UE unit, a UE station, a mobile station, a remote station, a remote terminal device, a mobile device, a UE agent, a UE apparatus, or the like. The terminal device may be fixed or mobile.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to a similar technical problem.

Before the method in this application is described in detail, some concepts in this application are first briefly described.

1. Frequency division duplex (frequency division duplex, FDD)

A BWP is classified into an uplink BWP and a downlink BWP. The uplink/downlink BWP may be understood as operating bandwidth of UE. The uplink/downlink BWP indicates a group of consecutive resource blocks (resource blocks, RBs) on an uplink/downlink carrier. Bandwidth of the uplink/downlink BWP is less than or equal to bandwidth of the uplink/downlink carrier. A plurality of uplink/downlink BWPs may be configured on one uplink/downlink carrier.

The FDD may be understood as that in a same slot, downlink transmission may be performed on the downlink BWP (Downlink BWP, DL BWP), and uplink transmission may be performed on the uplink BWP (Uplink BWP, UL BWP). The DL BWP and the UL BWP are located on different carriers, and are separated in frequency domain. For example, as shown in FIG. 2a, in a slot 0, downlink transmission may be performed on the DL BWP, and simultaneously, uplink transmission may be performed on the UL BWP.

2. Time division duplex (Time Division Duplex, TDD)

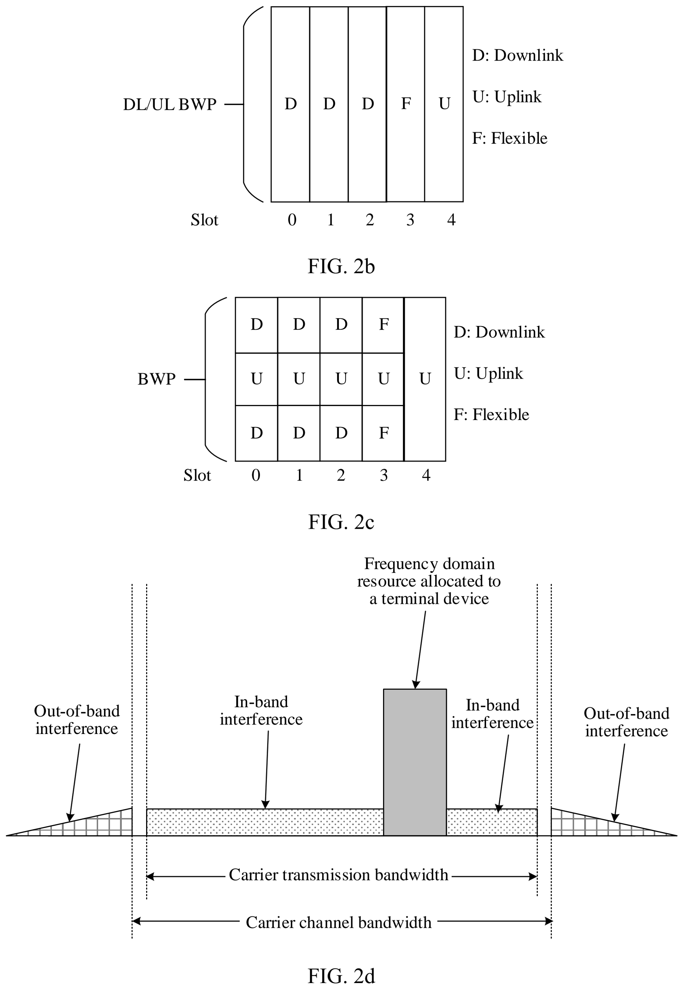

A center frequency of a DL BWP and a center frequency of a UL BWP are the same, and bandwidth of the DL BWP and bandwidth of the UL BWP may be the same or different. At a same moment, UE can perform only uplink transmission or downlink transmission. As shown in FIG. 2b, in a slot 0, only downlink transmission can be performed, and in a slot 4, only uplink transmission can be performed. A slot 3 is a flexible slot, to be specific, may be used for uplink transmission or downlink transmission, but cannot be used for uplink transmission and downlink transmission at the same time. A minimum granularity of uplink and downlink transmission switching is a symbol. For example, the slot 3 is the flexible slot, and includes 14 or 12 OFDM symbols. First M symbols are downlink symbols, last N symbols are uplink symbols, and middle 14-M-N (or 12-M-N) symbols are flexible symbols, where $0 \leq M \leq 14$, $0 \leq N \leq 14$, and $M+N \leq 14$. The downlink symbol is used for downlink transmission, the uplink symbol is used for uplink transmission, and the flexible symbol may be used for either uplink transmission or downlink transmission. A base station notifies a terminal device of a specific transmission direction through scheduling by using radio resource control (Radio Resource Control, RRC) signaling or downlink control information (Downlink Control Information, DCI).

In comparison with FDD, the TDD occupies fewer frequency domain resources. However, in the TDD, uplink transmission and downlink transmission cannot be performed simultaneously. For example, in the slot 0, only downlink transmission can be performed, and uplink transmission cannot be performed. Consequently, an uplink transmission delay is increased.

3. Subband full duplex (subband full duplex, SBFD)

The SBFD means that an uplink transmission resource and a downlink transmission resource may be configured simultaneously in a symbol or a slot of TDD. For example, as shown in FIG. 2c, in a slot, for example, a slot 0, there is a segment of frequency domain resources in a downlink BWP. Uplink transmission may be performed on the segment of frequency domain resources, and in the slot 0, uplink transmission may be performed, thereby reducing an uplink transmission delay. The segment of frequency domain resources is usually referred to as an uplink subband. In the slot 0, downlink transmission may be further performed. A frequency domain resource for the downlink transmission in the slot 0 is usually referred to as a downlink subband. A base station may simultaneously perform uplink transmission and downlink transmission in the slot 0 by using the uplink subband and the downlink subband. In comparison with TDD, for the SBFD, uplink resources are increased, so that uplink coverage can be increased. It may be understood that an example in which the slot 0 is used to describe the SBFD is used, and another slot or symbol may be used.

4. Transmitter requirement determined based on carrier bandwidth

A transmitter requirement for uplink transmission of a terminal device is defined for channel bandwidth (channel bandwidth), and the channel bandwidth is designed based on the carrier bandwidth. In other words, the transmitter requirement is determined based on the carrier bandwidth. For ease of description, the transmitter requirement is referred to as a second transmitter requirement in subsequent embodiments. The transmitter requirement determined based on the carrier bandwidth includes an in-band emission, an out-of-band emission, and maximum output power reduction (maximum output power reduction, MPR). Interference caused by transmission of the terminal device is limited by using the transmitter requirement.

In-band (In-band) emission: used to limit a ratio of output power on a frequency domain resource other than the allocated frequency domain resource in carrier transmission bandwidth to output power of the terminal device on the allocated frequency domain resource necessarily being less than or equal to a threshold preset in a protocol when a terminal device sends data on an allocated frequency domain resource. As shown in FIG. 2d, an area indicated by in-band interference is a frequency domain area limited by the in-band emission.

Out-of-band (out-of-band) emission: used to limit output power on a frequency domain resource outside carrier channel bandwidth necessarily being less than or equal to a threshold preset in a protocol when a terminal device sends data on an allocated frequency domain resource. Alternatively, the out-of-band emission is used to limit radiation on a frequency domain resource outside carrier channel bandwidth necessarily being less than or equal to a threshold preset in a protocol when a terminal device sends data on an allocated frequency domain resource. A value of the out-of-band radiation emission may be determined based on at least one of the following requirements: a spectrum emission mask (Spectrum emission mask), an additional spectrum emission mask (Additional spectrum emission mask), an adjacent channel leakage power ratio (Adjacent channel leakage ratio, ACLR), or transmit intermodulation (Transmit intermodulation). A value of the spectrum emission mask, the additional spectrum emission mask, the adjacent channel leakage power ratio, or the transmit intermodulation may be defined in an NR standard protocol. For example, refer to content in section 6.5.2 in the NR standard protocol 38.101. Details are not described herein. It may be understood that the at least one requirement is merely an example. As shown in FIG. 2d, an area indicated by out-of-band interference is a frequency domain area limited by the out-of-band emission.

Generally, an allowed in-band interference strength is greater than an allowed out-of-band interference strength, that is, a threshold in the in-band emission is greater than a threshold in the out-of-band emission.

It should be noted that in this application, when the terminal device sends data on the allocated frequency domain resource, the output power on the frequency domain resource other than the allocated frequency domain resource may be understood as interference caused to the frequency domain resource. This explanation is also applicable to subsequent embodiments.

MPR: When performing sending with high power, a radio frequency component of a terminal may reach a non-linear area of the component, increasing various types of interference. To avoid this problem, the terminal device is allowed to perform power back-off in a protocol, to be specific, power is properly reduced on a basis of transmit power specified by a network device, but a power back-off value needs to be less than or equal to an MPR value preset in the protocol. The following table is an example of the MPR for the terminal device of a power class 1 (power class 1), as shown in Table 1.

Table 1

| Modulation scheme | | MPR (dB) | | |
|---|---|---|---|---|
| | | **Edge RB allocations** | **Outer RB allocations** | **Inner RB allocations** |
| DFT-s-OFDM | Pi/2 BPSK | ≤0.5 | ≤0.5 | 0 |
| | Pi/2 BPSK w Pi/2 BPSK DMRS | ≤0.5 | 0 | 0 |
| | QPSK | ≤1 | | 0 |
| | 16 QAM | ≤2 | | ≤1 |
| | 64 QAM | ≤2.5 | | |
| | 256 QAM | ≤4.5 | | |
| CP-OFDM | QPSK | ≤3 | | ≤1.5 |
| | 16 QAM | ≤3 | | ≤2 |
| | 64 QAM | ≤3.5 | | |
| | 256 QAM | ≤6.5 | | |

Edge RB allocations, Outer RB allocations, and Inner RB allocations in the table are positions of frequency domain resources allocated to the terminal device in carrier bandwidth. The following describes a manner of determining the positions by using an example.

Step 1: Calculate $RB_{Start,\ Low}$ and $RB_{Start,\ High}$ according to the following formulas.

$$RB_{Start,\ Low}=\max(1,\ \mathrm{floor}(L_{CRB}/2))$$

$$RB_{Start,\ High}=N_{RB}-RB_{Start,\ Low}-L_{CRB}$$

$L_{CRB}$ indicates transmission bandwidth, is a frequency domain value of a segment of consecutive RBs, and is in a unit of RB. The frequency domain resources allocated to the terminal device are located in this segment of transmission bandwidth.

$N_{RB}$ is a maximum transmission bandwidth configuration, and is in a unit of RB. For values, refer to Table 2.

Table 2

| SCS (kHz) | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 188 | 216 | 242 | 270 | N/A | N/A | N/A | N/A | N/A |
| 30 | 11 | 24 | 38 | 51 | 65 | 78 | 92 | 106 | 119 | 133 | 162 | 189 | 217 | 245 | 273 |
| 60 | N/A | 11 | 18 | 24 | 31 | 38 | 44 | 51 | 58 | 65 | 79 | 93 | 107 | 121 | 135 |

Further, RB allocation (RB allocation), to be specific, the positions of the frequency domain resources allocated to the terminal device in the carrier bandwidth, may be obtained.

For Inner RB allocation, it is satisfied that $RB_{Start, Low} \leq RB_{Start} \leq RB_{Start, High}$. In addition, $L_{CRB} \leq ceil(N_{RB}/2)$.

$RB_{Start}$ is an RB with a smallest index in allocated RB resources.

ceil(x) indicates rounding up, and ceil(x) is equal to a minimum integer greater than or equal to x.

For Edge RB allocation, it is satisfied that an RB is allocated on $L_{CRB} \leq 2$ RBs at an edge of a channel.

Outer RB allocation is RB allocation other than Inner RB allocation and Edge RB allocation.

In a slot or symbol in which SBFD exists shown in FIG. 2c, one BWP includes uplink subbands and downlink subbands neighbor to the uplink subbands. If a terminal device sends data on an uplink subband still based on a transmitter requirement determined based on carrier bandwidth, a downlink subband neighbor to the uplink subband is located in a band for uplink transmission, that is, both the downlink subband and the uplink subband belong to a same carrier. Allowed in-band interference is usually stronger than allowed out-of-band interference. Therefore, when the terminal device sends the data on the uplink subband based on the transmitter requirement determined based on the carrier bandwidth, strong interference is caused to the neighboring downlink subband.

In embodiments of this application, to resolve the technical problem, a first transmitter requirement determined based on bandwidth of an uplink subband is proposed. To be specific, a frequency domain resource in the uplink subband is an in-band resource, and a frequency domain resource outside the uplink subband is an out-of-band resource. A terminal device sends data on an uplink subband of an activated BWP based on the first transmitter requirement. Because a neighboring downlink subband is an out-of-band subband, allowed out-of-band interference is weak. Therefore, when the terminal device sends the data based on the first transmitter requirement, interference caused to the neighboring downlink subband can be reduced.

The following describes embodiments of data transmission methods in this application by using examples. It should be noted that technical solutions (or referred to as embodiments) in this application may be implemented independently or may be implemented in combination based on some internal relationships. This is not limited in this application. In addition, various terms and definitions in embodiments may be mutually referenced. In each embodiment of this application, different implementations may be implemented in combination or may be implemented independently.

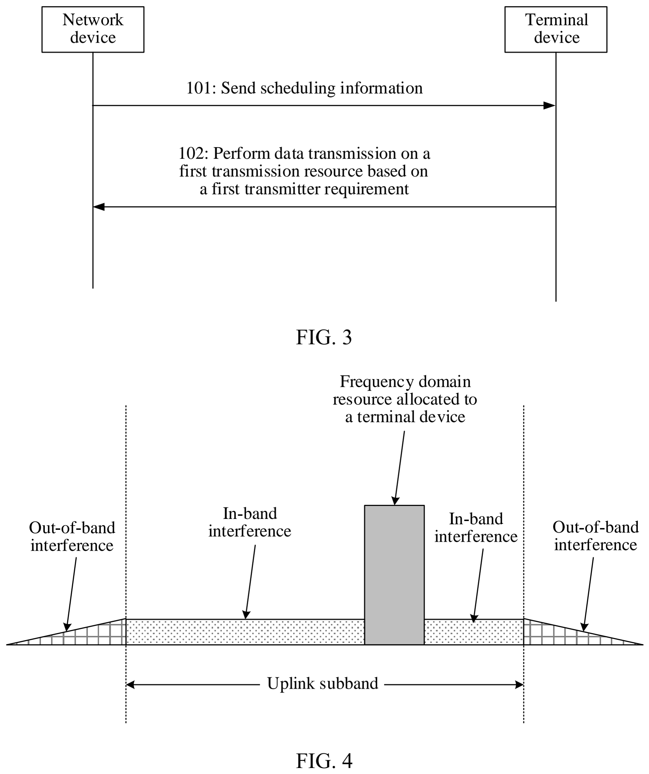

FIG. 3 is a schematic flowchart of a data transmission method according to an embodiment of this application. FIG. 1 may be a diagram of a system architecture to which the data transmission method is applicable. As shown in FIG. 3, the method may include 101 and 102. An execution sequence of steps is not limited in this embodiment of this application. As shown in the figure, the data transmission method in this embodiment of this application includes but is not limited to the following steps.

101: A network device sends scheduling information to a terminal device, where the scheduling information is used to schedule the terminal device to perform data transmission on a first transmission resource, a frequency domain resource of the first transmission resource is located on an uplink subband of an activated BWP of the terminal device, and the BWP further includes a downlink subband neighbor to the uplink subband. Correspondingly, the terminal device receives the scheduling information.

Data in this embodiment of this application may include but is not limited to: a physical uplink shared channel (Physical uplink shared channel, PUSCH), a physical uplink control channel (Physical uplink control channel, PUCCH), a physical random-access channel (Physical random-access channel, PRACH), a demodulation reference signal (Demodulation reference signal, DM-RS), a channel sounding reference signal (Sounding reference signal, SRS), a phase-tracking reference signal (Phase-tracking reference signal, PT-RS), and the like.

In some embodiments, the scheduling information may include parameter configuration information for the data transmission. The parameter configuration information may include but is not limited to at least one of the following: a waveform for the data transmission, resource allocation information for the data transmission, and the like. The resource allocation information may indicate the first transmission resource allocated to the terminal device. For example, the resource allocation information may include an RB allocated to the terminal device.

In some embodiments, the first transmission resource may include a time domain resource and a frequency domain resource. The time domain resource may include at least one symbol or at least one slot. In the at least one symbol or slot, an uplink subband used for uplink transmission and a downlink subband used for downlink transmission may be configured simultaneously in the activated BWP of the terminal device, and the uplink subband is neighbor to the downlink subband. As shown in FIG. 2c, if the time domain resource of the first transmission resource includes a slot 0, in the slot 0, two sides of an uplink subband U configured in the activated BWP of the terminal device are respectively neighbor to downlink subbands D. The frequency domain resource of the first transmission resource allocated to the terminal device is located on the uplink subband U. It may be understood that the frequency domain resource allocated to the terminal device may be a part or all of a frequency domain resource in the uplink subband. In some embodiments, the frequency domain resource allocated to the terminal device may be the RB allocated to the terminal device.

102: The terminal device performs data transmission on the first transmission resource based on a first transmitter requirement, where the first transmitter requirement is determined based on bandwidth of the uplink subband.

In some embodiments, that the terminal device performs data transmission on the first transmission resource based on the first transmitter requirement (Transmitter requirement) may be understood as that the first transmitter requirement needs to be met when the terminal device performs data transmission on the first transmission resource.

For example, the first transmitter requirement may be determined based on the bandwidth of the uplink subband. In other words, the bandwidth of the uplink subband is used to determine the first transmitter requirement. The first transmitter requirement may include at least one of the following: an in-band emission (In-band emissions for the non-allocated RB), an out-of-band emission (Out-of-band emission), or maximum output power reduction (maximum output power reduction). The following separately describes the in-band emission, the out-of-band emission, or the maximum output power reduction by using examples.

The in-band emission is used to limit a ratio of output power generated on a frequency domain resource other than the frequency domain resource of the first transmission resource in the uplink subband to output power generated on the frequency domain resource of the first transmission resource being less than or equal to a first threshold when the terminal device sends data on the first transmission resource. In some embodiments, the output power generated on the frequency domain resource other than the frequency domain resource of the first transmission resource in the uplink subband may be understood as interference power generated on the frequency domain resource other than the frequency domain resource of the first transmission resource in the uplink subband, that is, in-band interference. As shown in FIG. 4, a frequency domain resource of in-band interference and a frequency domain resource of out-of-band interference are determined based on the bandwidth of the uplink subband. In FIG. 4, the frequency domain resource allocated to the terminal device is the frequency domain resource of the first transmission resource, and a frequency domain resource other than the frequency domain resource allocated to the terminal device in the uplink subband is the frequency domain resource of the in-band interference.

The out-of-band emission is used to limit output power generated on a frequency domain resource other than the uplink subband being less than or equal to a second threshold when the terminal device sends data on the first transmission resource. In some embodiments, the output power generated on the frequency domain resource other than the uplink subband may be understood as interference power generated on the frequency domain resource other than the uplink subband, that is, out-of-band interference. As shown in FIG. 4, a frequency domain resource of in-band interference and a frequency domain resource of out-of-band interference are determined based on the bandwidth of the uplink subband. In FIG. 4, the frequency domain resource allocated to the terminal device is the frequency domain resource of the first transmission resource, and the frequency domain resource other than the uplink subband is the frequency domain resource of the out-of-band interference. In some embodiments, a guard subband may be included between the uplink subband and the neighboring downlink subband. Alternatively, the out-of-band emission may be defined as that when the terminal device sends the data on the first transmission resource, output power generated on a frequency domain resource other than the uplink subband and the guard subband is less than or equal to a second threshold. Alternatively, the out-of-band emission may be used to limit radiation on the frequency domain resource other than the uplink subband being less than or equal to a second threshold when the terminal device sends the data on the allocated frequency domain resource. A value of the out-of-band radiation emission may be determined based on at least one requirement, and the at least one requirement may include but is not limited to: a spectrum emission mask (Spectrum emission mask), an additional spectrum emission mask (Additional spectrum emission mask), an adjacent channel leakage power ratio (Adjacent channel leakage ratio, ACLR), transmit intermodulation (Transmit intermodulation), or the like. For details, refer to the descriptions in the foregoing embodiments. Details are not described herein again.

The maximum output power reduction is used to limit a maximum value of transmit power that is allowed to be reduced, when the terminal device sends data on the uplink subband, from transmit power specified by the network device. A value of maximum power reduction in the first transmitter requirement may alternatively be determined based on at least one of a waveform or a modulation scheme for sending the data by the terminal device, or a position of the frequency domain resource of the first transmission resource on the uplink subband. It should be noted that the position of the frequency domain resource of the first transmission resource on the uplink subband may include one of Edge RB allocations, Outer RB allocations, and Inner RB allocations. For a method for determining the position, refer to the descriptions in the foregoing embodiments. $N_{RB}$ in the foregoing embodiments needs to be equal to the bandwidth of the uplink subband.

In some embodiments, an allowed in-band interference strength is greater than an allowed out-of-band interference strength. In other words, the first threshold in the in-band emission is greater than the second threshold in the out-of-band emission.

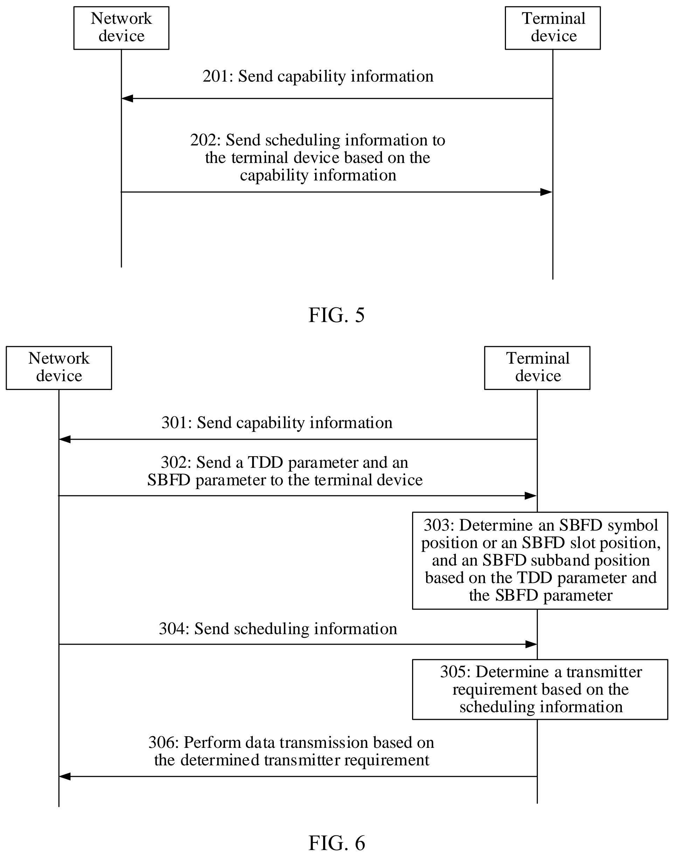

In a possible implementation, if the terminal device supports the first transmitter requirement determined based on the bandwidth of the uplink subband, the terminal device may perform data transmission on the first transmission resource based on the first transmitter requirement. If the terminal device does not support the first transmitter requirement, the terminal device may perform data transmission on the first transmission resource based on a second transmitter requirement determined based on carrier bandwidth. For details about the second transmitter requirement determined based on the carrier bandwidth, refer to the descriptions in the foregoing embodiments. Details are not described herein again. In some embodiments, the terminal device may report a capability to the network device, to indicate whether the terminal device supports the first transmitter requirement. For details, refer to descriptions in an embodiment in FIG. 5. Details are not described temporarily.

In a possible implementation, if the parameter configuration information for the data transmission of the terminal device meets the at least one parameter configuration, the terminal device may perform data transmission on the first transmission resource based on the first transmitter requirement. If the parameter configuration information for the data transmission of the terminal device does not meet any parameter configuration, the terminal device may perform data transmission on the first transmission resource based on the second transmitter requirement determined based on the carrier bandwidth.

In some embodiments, the foregoing parameter configuration may be a preconfigured parameter configuration, for example, may be a parameter configuration specified in a protocol. Alternatively, the foregoing parameter configuration may be a parameter configuration reported by the terminal device to the network device when the terminal device reports the capability. For ease of description, in this application, a quantity of preconfigured parameter configurations or a quantity of parameter configurations reported by the terminal device is set to n, and a quantity of parameter configurations that the parameter configuration information for the data transmission meets is set to m. In other words, if n parameter configurations are preconfigured or the terminal device reports n parameter configurations, and the data transmission of the terminal device meets m parameter configurations in the n parameter configurations, the terminal device performs data transmission on the first transmission resource based on the first transmitter requirement. m and n are integers greater than or equal to 1, and m is less than or equal to n.

For example, one parameter configuration may include at least one of the following parameters: the waveform for the data transmission, a frequency domain resource allocation parameter for the data transmission, or bandwidth occupied by the guard subband, where the guard subband is a guard band between the uplink subband and the neighboring downlink subband in the BWP.

In some embodiments, the frequency domain resource allocation parameter for the data transmission may include one or more of a first parameter, a frequency domain resource position, and a quantity of frequency domain units. The first parameter may indicate whether the frequency domain resource (that is, the frequency domain resource of the first transmission resource) allocated to the terminal device is a consecutive frequency domain resource. The frequency domain resource position may be the position that is on the uplink subband and that is of the frequency domain resource (that is, the frequency domain resource of the first transmission resource) allocated to the terminal device. The quantity of frequency domain units may be a quantity of frequency domain units included in the frequency domain resource (that is, the frequency domain resource of the first transmission resource) allocated to the terminal device. For example, the frequency domain unit may be an RB.

For example, the position that is on the uplink subband and that is of the frequency domain resource (that is, the frequency domain resource of the first transmission resource) allocated to the terminal device may include but is not limited to: The frequency domain resource is located on a center of the uplink subband (for example, Inner RB allocations), the frequency domain resource is located at an edge of the uplink subband (for example, Edge RB allocations), and the frequency domain resource is located at a position far away from the center of the uplink subband (for example, Outer RB allocations). For a manner of determining the position of the frequency domain resource on the uplink subband, refer to the method for determining Edge RB allocations, Outer RB allocations, or Inner RB allocations in the foregoing embodiment. A value of $N_{RB}$ is the bandwidth of the uplink subband.

In some embodiments, one parameter configuration may include a respective parameter condition corresponding to the at least one parameter. The parameter condition corresponding to the parameter may be understood as that the parameter needs to meet the corresponding parameter condition. It may be understood that different parameter configurations may include same parameters or different parameters, and parameter conditions that need to be met by the same parameters in the different parameter configurations may be the same or may be different. This is not limited in this application. The following uses four possible implementations as examples for description. It may be understood that the following examples do not constitute a limitation on this application, and parameters in various parameter configurations may be flexibly combined.

In a first possible implementation, one parameter configuration may include a parameter, and the parameter is the waveform for the data transmission. The waveform may include a discrete Fourier transform-spread orthogonal frequency division multiplexing (Discrete Fourier Transform-Spread Orthogonal Frequency Division Multiplexing, DFT-S-OFDM) waveform or a cyclic prefix orthogonal frequency division multiplexing (Cyclic Prefix Orthogonal Frequency Division Multiplexing, CP-OFDM) waveform.

For example, one parameter configuration in the n parameter configurations may include the waveform for the data transmission, and a parameter condition corresponding to the waveform in the parameter configuration is that the waveform for the data transmission is the DFT-S-OFDM waveform, to be specific, the terminal device supports the first transmitter requirement in the DFT-S-OFDM waveform.

In a second possible implementation, one parameter configuration may include the waveform and the frequency domain resource allocation parameter for the data transmission. The frequency domain resource allocation parameter may include one or more of the first parameter, the frequency domain resource position, and the quantity of frequency domain units. For example, if the frequency domain resource allocation parameter includes the first parameter, a parameter condition corresponding to the first parameter may be that the first parameter indicates that the frequency domain resource is consecutively allocated. For example, if the frequency domain resource allocation parameter includes the frequency domain resource position, a parameter condition corresponding to the frequency domain resource position may be that the frequency domain resource is located on the center of the uplink subband (for example, Inner RB allocations). For example, if the quantity that is of frequency domain units and that is included in the frequency domain resource allocation parameter is less than or equal to a third threshold, the parameter condition corresponding to the waveform for the data transmission in the parameter configuration may be that the waveform for the data transmission is the CP-OFDM waveform. It may be understood that parameter conditions corresponding to parameters are merely examples.

In an example, one parameter configuration in the n parameter configurations includes the waveform for the data transmission and the first parameter in the frequency domain resource allocation parameter. Parameter conditions respectively corresponding to the waveform and the first parameter in the parameter configuration are that the waveform for the data transmission is the CP-OFDM waveform, and the first parameter indicates that the frequency domain resource is a consecutively allocated frequency domain resource, in other words, the terminal device supports the first transmitter requirement in a scenario in which the waveform for the data transmission is the CP-OFDM waveform and the frequency domain resource is consecutively allocated.

In another example, one parameter configuration in the n parameter configurations includes the waveform for the data transmission, and the first parameter and the frequency domain resource position in the frequency domain resource allocation parameter. Parameter conditions respectively corresponding to the waveform, the first parameter, and the frequency domain resource position in the parameter configuration are that the waveform for the data transmission is the CP-OFDM waveform, the first parameter indicates that the frequency domain resource is a consecutively allocated frequency domain resource, and the frequency domain resource is located on the center of the uplink subband, to be specific, the terminal device supports the first transmitter requirement in a scenario in which the waveform for the data transmission is the CP-OFDM waveform, the frequency domain resource is consecutively allocated, and the frequency domain resource is located on the center of the uplink subband.

In still another example, one parameter configuration in the n parameter configurations includes the waveform for the data transmission, and the first parameter and the quantity that is of frequency domain units and that is in the frequency domain resource allocation parameter. Parameter conditions respectively corresponding to the waveform, the first parameter, and the quantity of frequency domain units in the parameter configuration are that the waveform for the data transmission is the CP-OFDM waveform, the first parameter indicates that the frequency domain resource is a consecutively allocated frequency domain resource, and the quantity of frequency domain units included in the frequency domain resource is less than or equal to the third threshold, to be specific, the terminal device supports the first transmitter requirement in a scenario in which the waveform for the data transmission is the CP-OFDM waveform, the frequency domain resource is consecutively allocated, and the quantity of frequency domain units included in the frequency domain resource is less than or equal to the third threshold.

In a third possible implementation, one parameter configuration may include the waveform for the data transmission and the bandwidth occupied by the guard subband. Parameter conditions respectively corresponding to the waveform and the bandwidth occupied by the guard subband in the parameter configuration are that the waveform for the data transmission is the DFT-S-OFDM waveform, and the bandwidth occupied by the guard subband is greater than or equal to a fourth threshold, to be specific, the terminal device supports the first transmitter requirement in a scenario in which the waveform for the data transmission is the DFT-S-OFDM waveform, and the bandwidth occupied by the guard subband is greater than or equal to the fourth threshold.

In a fourth possible implementation, one parameter configuration may include the waveform and the frequency domain resource allocation parameter for the data transmission, and the bandwidth occupied by the guard subband. The frequency domain resource allocation parameter may include one or more of the first parameter, the frequency domain resource position, and the quantity of frequency domain units. A parameter condition corresponding to the waveform in the parameter configuration is that the waveform for the data transmission is the CP-OFDM waveform. A parameter condition corresponding to the bandwidth occupied by the guard subband in the parameter configuration is that the bandwidth occupied by the guard subband is greater than or equal to a fourth threshold. For a parameter condition corresponding to the frequency domain resource allocation parameter, refer to the parameter condition corresponding to the frequency domain resource allocation parameter in the second possible implementation. Details are not described herein again.

It should be noted that the parameter configurations in the first possible implementation to the fourth possible implementation may be used in combination or separately. For example, the n parameter configurations may include the parameter configuration in one or more of the first possible implementation to the fourth possible implementation. For example, the n parameter configurations may include the parameter configuration in the first possible implementation and the parameter configuration in the second possible implementation. For another example, the n parameter configurations may include the parameter configuration in the first possible implementation and the parameter configuration in the third possible implementation. For another example, the n parameter configurations may include the parameter configuration in the first possible implementation, the parameter configuration in the second possible implementation, and the parameter configuration in the third possible implementation, and the like. This is not limited in this application.

In some embodiments, one parameter configuration in the n parameter configurations may correspond to one candidate value of the first transmitter requirement. For example, if the first transmitter requirement includes the in-band emission, a candidate value of the first transmitter requirement includes a value of the first threshold in the in-band emission. That is, one parameter configuration corresponds to one first threshold of the in-band emission. For example, a first threshold corresponding to a parameter configuration 1 is H1, and a first threshold corresponding to a parameter configuration 2 is H2, where H1 and H2 may be the same or different.

For example, if the first transmitter requirement includes the out-of-band emission, a candidate value of the first transmitter requirement includes a value of the second threshold in the out-of-band emission. That is, one parameter configuration corresponds to one second threshold of the out-of-band emission. For example, a second threshold corresponding to a parameter configuration 1 is G1, and a second threshold corresponding to a parameter configuration 2 is G2, where G1 and G2 may be the same or different.

For example, if the first transmitter requirement includes the maximum output power reduction, the candidate value of the first transmitter requirement includes a value of the maximum output power reduction. That is, one parameter configuration corresponds to one value of the maximum output power reduction. For example, a value of maximum output power reduction corresponding to a parameter configuration 1 is J1, and a value of maximum output power reduction corresponding to a parameter configuration 2 is J2, where J1 and J2 may be the same or different.

The data transmission of the terminal device may meet the m parameter configurations in the n parameter configurations, where m is an integer greater than or equal to 1. Further, a first value of the first transmitter requirement is determined based on candidate values that are of the first transmitter requirement and that correspond to the m parameter configurations, to perform data transmission on the first transmission resource based on the first value of the first transmitter requirement. That is, the data transmission of the terminal device needs to meet the first value of the first transmitter requirement.

For example, if m is equal to 1, to be specific, the data transmission of the terminal device meets one parameter configuration, a candidate value that is of the first transmitter requirement and that corresponds to the parameter configuration is determined as the first value of the first transmitter requirement. For example, for the out-of-band emission, if the terminal device meets the parameter configuration 1, the second threshold G1 corresponding to the parameter configuration 1 serves as the first value of the out-of-band emission.

For example, if m is greater than 1, to be specific, the data transmission of the terminal device meets a plurality of parameter configurations, the first value of the first transmitter requirement may be determined based on candidate values respectively corresponding to the plurality of parameter configurations. For example, for the out-of-band emission, a minimum threshold or a maximum threshold in second thresholds respectively corresponding to the plurality of parameter configurations may serve as the first value of the out-of-band emission. For another example, for the maximum output power reduction, a minimum value or a maximum value in values that are of the maximum output power reduction and that respectively correspond to the plurality of parameter configurations may serve as a first value of the maximum output power reduction. For another example, for the in-band emission, a minimum threshold or a maximum threshold in first thresholds respectively corresponding to the plurality of parameter configurations may serve as a first value of the in-band emission.

In this embodiment of this application, the network device schedules the terminal device to send the data on the uplink subband of the activated BWP, where the BWP further includes the downlink subband neighbor to the uplink subband. The terminal device performs data transmission based on the first transmitter requirement. The first transmitter requirement is determined based on the bandwidth of the uplink subband, that is, the uplink subband is an in-band subband, and the downlink subband neighbor to the uplink subband is an out-of-band subband. The allowed out-of-band interference is weaker than the allowed in-band interference. Therefore, interference caused to the neighboring downlink subband when the terminal device performs data transmission can be reduced.

FIG. 5 is a schematic flowchart of another data transmission method according to an embodiment of this application. FIG. 1 may be a diagram of a system architecture to which the data transmission method is applicable. As shown in FIG. 5, the method may include 201 and 202. An execution sequence of steps is not limited in this embodiment of this application. As shown in the figure, the data transmission method in this embodiment of this application includes but is not limited to the following steps.

201: A terminal device sends capability information to a network device, where the capability information indicates that the terminal device supports a first transmitter requirement, the first transmitter requirement is determined based on bandwidth of an uplink subband of an activated BWP of the terminal device, and the BWP further includes a downlink subband neighbor to the uplink subband. Correspondingly, the network device receives the capability information from the terminal device.

In some embodiments, the terminal device may send the capability information to the network device. The capability information indicates whether the terminal device supports the first transmitter requirement, that is, whether the terminal device supports the first transmitter requirement determined based on the bandwidth of the uplink subband.

In some embodiments, if the terminal device supports the first transmitter requirement, the capability information is sent to the network device, where the capability information indicates that the terminal device supports the first transmitter requirement. If the terminal device does not support the first transmitter requirement, the capability information may not be sent.

In some embodiments, the capability information may further indicate that the terminal device supports the first transmitter requirement when parameter configuration information for data transmission meets at least one parameter configuration. The at least one parameter configuration may alternatively be reported by the terminal device to the network device by using the capability information. For ease of description, in this application, the terminal device reports n parameter configurations to the network device by using the capability information, that is, the capability information includes the n parameter configurations. If scheduling information for the data transmission of the terminal device meets m parameter configurations in the n parameter configurations, the terminal device supports the first transmitter requirement, where m is less than or equal to n, and is an integer greater than or equal to 1. For descriptions of the parameter configurations, refer to the descriptions in the embodiment in FIG. 3. Details are not described herein again.

In this embodiment of this application, the terminal device supports determining a transmitter requirement based on carrier bandwidth. For ease of description, the transmitter requirement determined based on the carrier bandwidth is referred to as a second transmitter requirement in this application.

202: The network device sends the scheduling information to the terminal device based on the capability information, where the scheduling information is used to schedule the terminal device to perform data transmission on a first transmission resource, and a frequency domain resource of the first transmission resource is located on the uplink subband.

In some embodiments, the network device may schedule the data transmission of the terminal device based on the capability information reported by the terminal device. For example, if the terminal device supports the first transmitter requirement, a frequency domain resource at an edge of the uplink subband may be scheduled to the terminal device, that is, a frequency domain resource that causes strong interference to the neighboring downlink subband is scheduled to the terminal device that supports the first transmitter requirement, and a frequency domain resource (for example, a frequency domain resource on a center of the uplink subband) that causes weak interference to the neighboring downlink subband is scheduled to a terminal device that does not support the first transmitter requirement but supports the second transmitter requirement.

For example, if the terminal device that performs data transmission in the uplink subband supports the first transmitter requirement, when the network device schedules a resource for the data transmission of the terminal device in the neighboring downlink subband, the network device may simultaneously schedule, to perform data transmission in the neighboring downlink subband, a terminal device that is very close to the terminal device that performs data transmission in the uplink subband. In other words, a distance between the terminal device for the data transmission in the uplink subband and the terminal device for the data transmission in the neighboring downlink subband may not be considered.

In some embodiments, if the terminal device reports, by using the capability information, to support the first transmitter requirement when the scheduling information for the data transmission meets one or more of the n parameter configurations, if the network device needs the terminal device to perform data transmission based on the first transmitter requirement, when the terminal device is scheduled to perform data transmission, it needs to be ensured that the scheduling information for the data transmission meets one or more of the m parameter configurations. For example, the distance between the terminal device for the data transmission in the uplink subband and the terminal device for the data transmission in the neighboring downlink subband is close. To ensure that the data transmission of the terminal device in the uplink subband does not cause strong interference to the neighboring downlink subband, it may be ensured that the scheduling information of the terminal device in the uplink subband meets the parameter configuration. For example, a waveform for scheduling the data transmission in the uplink subband is a DFT-S-OFDM waveform.

Correspondingly, the terminal device receives the scheduling information, and if the parameter configuration information for the data transmission in the scheduling information meets the one or more parameter configurations of the n parameter configurations for capability reporting, data transmission is performed based on the first transmitter requirement. If the parameter configuration information for the data transmission in the scheduling information does not meet any parameter configuration, data transmission is performed based on the second transmitter requirement.

In this embodiment of this application, the network device may schedule the data transmission of the terminal device based on the capability information reported by the terminal device, to meet requirements in various scenarios.

FIG. 6 is a schematic flowchart of still another data transmission method according to an embodiment of this application. FIG. 1 may be a diagram of a system architecture to which the data transmission method is applicable. As shown in FIG. 6, the method may include 301 to 306. An execution sequence of steps is not limited in this embodiment of this application. As shown in the figure, the data transmission method in this embodiment of this application includes but is not limited to the following steps. It may be understood that the data transmission method may alternatively include a part of the following steps.

301: A terminal device sends capability information to a network device. Correspondingly, the network device receives the capability information.

For step 301 in this embodiment of this application, refer to step 201 in the embodiment in FIG. 5. Details are not described herein again.

302: The network device sends a TDD parameter and an SBFD parameter to the terminal device. Correspondingly, the terminal device receives the TDD parameter and the SBFD parameter.

303: The terminal device determines an SBFD symbol position or an SBFD slot position, and an SBFD subband position based on the TDD parameter and the SBFD parameter.

The TDD parameter may include but is not limited to slot indexes of a downlink slot, an uplink slot, and a flexible slot, and symbol indexes of an uplink symbol, a downlink symbol, and a flexible symbol in the flexible slot. Downlink symbols in the downlink slot and the flexible slot are used for downlink data transmission. Uplink symbols in the uplink slot and the flexible slot are used for uplink data transmission. The flexible symbol in the flexible slot may be used for either uplink data transmission or downlink data transmission.

The SBFD parameter may include but is not limited to the following parameters: an SBFD slot index, an SBFD symbol index, and an SBFD subband position in an SBFD symbol or an SBFD slot. The SBFD symbol may be a DL symbol, a UL symbol, or a flexible symbol configured in the TDD parameter. The SBFD slot may be a UL slot, a DL slot, or a flexible slot, or may be a slot different from three types of slot types (the uplink slot, the downlink slot, and the flexible slot) in the TDD parameter. The SBFD symbol or the SBFD slot may be understood as that there are an uplink subband and a downlink subband in a BWP of the symbol or the slot.

An SBFD subband may be at a frequency domain position of the uplink subband and/or the downlink subband in the BWP. In some implementations, the SBFD subband may further include a guard subband, where the guard subband is a guard band between the uplink subband and the neighboring downlink subband in the BWP.

The terminal device may determine the SBFD symbol or SBFD slot position, and the SBFD subband position based on the TDD parameter and the SBFD parameter. For example, the SBFD subband may include one or more of a UL subband, a DL subband, and the guard subband.

304: The network device sends scheduling information. Correspondingly, the terminal device receives the scheduling information, where the scheduling information is used to schedule the terminal device to perform data transmission on a first transmission resource, a frequency domain resource of the first transmission resource is located on an uplink subband of an activated BWP of the terminal device, and the BWP further includes a downlink subband neighbor to the uplink subband. Correspondingly, the terminal device receives the scheduling information.

In some embodiments, the network device may send the scheduling information based on the capability information sent by the terminal device. For details, refer to step 202 in the embodiment in FIG. 5. Details are not described herein again.

305: The terminal device determines a transmitter requirement based on the scheduling information.

306: The terminal device performs data transmission based on the determined transmitter requirement.

In some embodiments, if the terminal device supports a first transmitter requirement, the terminal device performs data transmission based on the first transmitter requirement; or if the terminal device does not support a first transmitter requirement, the terminal device performs data transmission based on a second transmitter requirement. The first transmitter requirement is a transmitter requirement determined based on bandwidth of the uplink subband, and the second transmitter requirement is a transmitter requirement determined based on carrier bandwidth.

In some embodiments, the scheduling information includes parameter configuration information for the data transmission. If the parameter configuration information meets at least one of n parameter configurations for reporting the capability information, data transmission is performed based on the first transmitter requirement. If the parameter configuration information does not meet any parameter configuration, data transmission is performed based on the second transmitter requirement.

The following describes communication apparatuses provided in embodiments of this application.

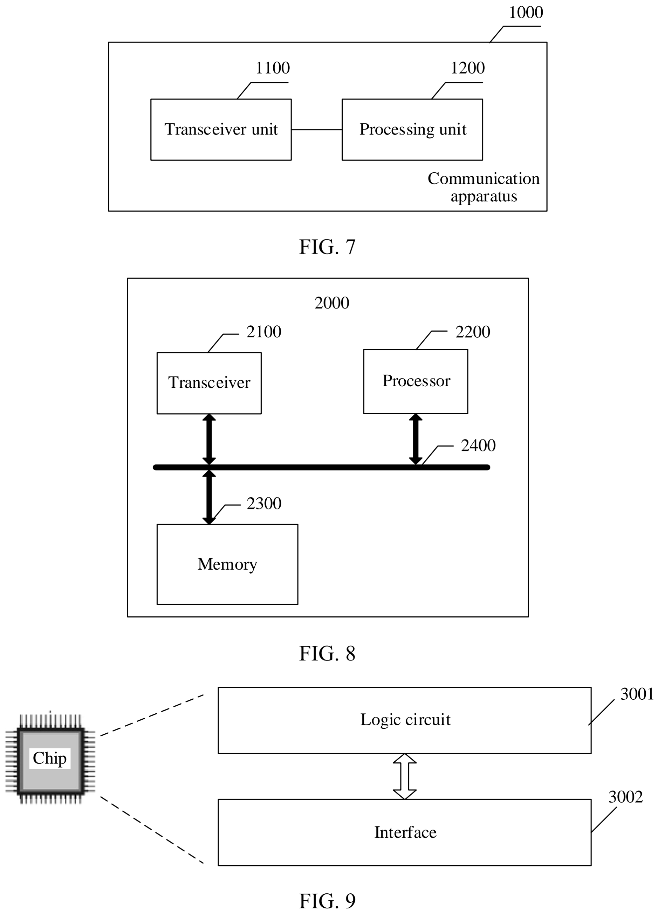

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail the communication apparatuses in embodiments of this application with reference to FIG. 7 to FIG. 9.

FIG. 7 is a diagram of a structure of a communication apparatus according to an embodiment of this application. As shown in FIG. 7, the communication apparatus 1000 may correspondingly implement functions or steps implemented by the communication apparatus (for example, the terminal device or the network device) in the foregoing method embodiments. The communication apparatus may include a processing unit 1200 and a transceiver unit 1100. Optionally, the communication apparatus may further include a storage unit. The storage unit may be configured to store instructions (code or a program) and/or data. The processing unit 1200 and the transceiver unit 1100 may be coupled to the storage unit. For example, the processing unit 1200 may read the instructions (the code or the program) and/or the data in the storage unit, to implement a corresponding method. The foregoing units may be disposed independently, or may be integrated partially or completely. For example, the transceiver unit 1100 may include a sending unit and a receiving unit. The sending unit may be a transmitter, and the receiving unit may be a receiver. An entity corresponding to the transceiver unit 1100 may be a transceiver.

In some possible implementations, the communication apparatus 1000 can correspondingly implement behavior and functions of the terminal device in the foregoing method embodiments. For example, the communication apparatus 1000 may be a terminal device, or may be a component (for example, a chip or a circuit) used in the terminal device. The transceiver unit 1100 may be, for example, configured to perform all receiving or sending operations performed by the terminal device in the embodiments in FIG. 3, FIG. 5, and FIG. 6. The processing unit 1200 is configured to perform all operations, other than the sending and receiving operations, performed by the terminal device.

In a possible design, the communication apparatus 1000 includes the processing unit 1200 and the transceiver unit 1100.

The transceiver unit 1100 is configured to receive scheduling information from a network device, where the scheduling information is used to schedule a terminal device to perform data transmission on a first transmission resource, a frequency domain resource of the first transmission resource is located on an uplink subband of an activated bandwidth part BWP of the terminal device, and the BWP further includes a downlink subband neighbor to the uplink subband.

The processing unit 1200 is configured to perform data transmission on the first transmission resource based on a first transmitter requirement, where the first transmitter requirement is determined based on bandwidth of the uplink subband.

For example, the first transmitter requirement includes at least one of the following: an in-band emission, an out-of-band emission, or maximum output power reduction.

The in-band emission is used to limit a ratio of output power generated on a frequency domain resource other than the frequency domain resource of the first transmission resource in the uplink subband to output power generated on the frequency domain resource of the first transmission resource being less than or equal to a first threshold when the terminal device sends data on the first transmission resource.

The out-of-band emission is used to limit output power generated on a frequency domain resource other than the uplink subband being less than or equal to a second threshold when the terminal device sends data on the first transmission resource.

The maximum output power reduction is used to limit a maximum value of transmit power that is allowed to be reduced, when the terminal device sends data on the uplink subband, from transmit power specified by the network device.

For example, the transceiver unit 1100 is further configured to send capability information to the network device, where the capability information indicates that the terminal device supports the first transmitter requirement.

For example, the capability information indicates that the terminal device supports the first transmitter requirement when parameter configuration information for the data transmission meets at least one parameter configuration.

One parameter configuration in the at least one parameter configuration includes at least one of the following parameters: a waveform for the data transmission, a frequency domain resource allocation parameter for the data transmission, or bandwidth occupied by a guard subband, where the guard subband is a guard band between the uplink subband and the downlink subband in the BWP.

For example, the frequency domain resource allocation parameter includes one or more of a first parameter, a frequency domain resource position, and a quantity of frequency domain units.

The first parameter indicates whether the frequency domain resource is a consecutive frequency domain resource, the frequency domain resource position is a position of the frequency domain resource on the uplink subband, and the quantity of frequency domain units is a quantity of frequency domain units included in the frequency domain resource.

For example, the capability information includes the at least one parameter configuration.

For example, the scheduling information includes parameter configuration information for the data transmission.

The processing unit 1200 is specifically configured to: when the parameter configuration information meets the at least one parameter configuration, perform data transmission on the first transmission resource based on the first transmitter requirement.

The parameter configuration in the at least one parameter configuration corresponds to one candidate value of the first transmitter requirement.

The processing unit 1200 is further configured to determine a first value of the first transmitter requirement based on a respective candidate value corresponding to the at least one parameter configuration that the parameter configuration information meets.

The processing unit 1200 is specifically configured to perform data transmission on the first transmission resource based on the first value of the first transmitter requirement.

In another possible design, the communication apparatus 1000 includes the transceiver unit 1100.

The transceiver unit is configured to send capability information to a network device, where the capability information indicates that a terminal device supports a first transmitter requirement, the first transmitter requirement is determined based on bandwidth of an uplink subband of an activated bandwidth part BWP of the terminal device, and the BWP further includes a downlink subband neighbor to the uplink subband.

In some possible implementations, the communication apparatus 1000 can correspondingly implement behavior and a function of the network device in the foregoing method embodiments. For example, the communication apparatus 1000 may be a network device, or may be a component (for example, a chip or a circuit) used in the network device. The transceiver unit 1100 may be, for example, configured to perform all receiving or sending operations performed by the network device in the embodiments in FIG. 3, FIG. 5, and FIG. 6. The processing unit 1200 is configured to perform all operations, other than the receiving and sending operations, performed by the network device in the embodiments in FIG. 3, FIG. 5, and FIG. 6.

In still another possible design, the communication apparatus 1000 includes the processing unit 1200 and the transceiver unit 1100.

The transceiver unit 1100 is configured to receive capability information from a terminal device, where the capability information indicates that the terminal device supports a first transmitter requirement, the first transmitter requirement is determined based on bandwidth of an uplink subband of an activated bandwidth part BWP of the terminal device, and the BWP further includes a downlink subband neighbor to the uplink subband.

The processing unit 1200 is configured to send scheduling information to the terminal device based on the capability information by using the transceiver unit 1100, where the scheduling information is used to schedule the terminal device to perform data transmission on a first transmission resource, and a frequency domain resource of the first transmission resource is located on the uplink subband.

The terminal device and the network device in embodiments of this application are described above, and possible product forms of the terminal device and the network device are described below. It should be understood that a product in any form that has a function of the terminal device in FIG. 7 or a product in any form that has a function of the network device in FIG. 7 falls within the protection scope of embodiments of this application. It should be further understood that the following descriptions are merely examples, and product forms of the network device and the terminal device in embodiments of this application are not limited thereto.

In a possible implementation, in the communication apparatus shown in FIG. 7, the processing unit 1200 may be one or more processors, and the transceiver unit 1100 may be a transceiver. Alternatively, the transceiver unit 1100 may be a sending unit and a receiving unit, the sending unit may be a transmitter, and the receiving unit may be a receiver. The sending unit and the receiving unit are integrated into one device, for example, a transceiver. In embodiments of this application, the processor and the transceiver may be coupled, or the like. A connection manner between the processor and the transceiver is not limited in embodiments of this application.

FIG. 8 is a diagram of a structure of another communication apparatus 2000 according to an embodiment of this application. The communication apparatus in FIG. 8 may be the foregoing terminal device, or may be the foregoing network device.

As shown in FIG. 8, the communication apparatus 2000 includes one or more processors 2200 and a transceiver 2100. The transceiver 2100 may implement a function of the transceiver unit 1100, and the processor 2200 may implement a function of the processing unit 1200.

In implementations of the communication apparatus shown in FIG. 8, the transceiver may include a receiver and a transmitter. The receiver is configured to perform a receiving function (or operation), and the transmitter is configured to perform a transmission function (or operation). In addition, the transceiver is configured to communicate with another device/apparatus through a transmission medium.

Optionally, the communication apparatus 2000 may further include one or more memories 2300, configured to store program instructions and/or data. The memory 2300 is coupled to the processor 2200. The coupling in this embodiment of this application may be an indirect coupling or a communication connection between apparatuses, units, or modules in an electrical form, a mechanical form, or another form, and is used for information exchange between the apparatuses, the units, or the modules. The processor 2200 may cooperate with the memory 2300. The processor 2200 may execute the program instructions stored in the memory 2300.

In this embodiment of this application, a specific connection medium between the transceiver 2100, the processor 2200, and the memory 2300 is not limited. In this embodiment of this application, the transceiver 2100, the processor 2200, and the memory 2300 are connected through a bus 2400 in FIG. 8. The bus is represented by a bold line in FIG. 8. A connection manner between other components is merely an example for description, and constitutes no limitation. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly performed and complemented by a hardware processor, or may be performed and complemented by using a combination of hardware and software modules in the processor, or the like.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. In this embodiment of this application, the memory may alternatively be a circuit or any other apparatus that can implement a storage function, and is configured to store the program instructions and/or the data.

The processor 2200 is mainly configured to: process a communication protocol and communication data, control the entire communication apparatus, execute a software program, and process data of the software program. The memory 2300 is mainly configured to store the software program and data. The transceiver 2100 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, like a touchscreen, a display, or a keyboard, is mainly configured to: receive data input by a user and output data to the user.

After the communication apparatus is powered on, the processor 2200 may read the software program in the memory 2300, explain and execute instructions of the software program, and process the data of the software program. When data needs to be sent in a wireless manner, the processor 2200 performs baseband processing on to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2200. The processor 2200 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further include more components than those in FIG. 8, and the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 7, the processing unit 1200 may be one or more logic circuits, and the transceiver unit 1100 may be an input/output interface, which may alternatively be referred to as a communication interface, an interface circuit, an interface, or the like. Alternatively, the transceiver unit 1100 may be a sending unit and a receiving unit. The sending unit may be an output interface, and the receiving unit may be an input interface. The sending unit and the receiving unit are integrated into one unit, for example, an input/output interface. As shown in FIG. 9, a communication apparatus shown in FIG. 9 includes a logic circuit 3001 and an interface 3002. That is, the foregoing processing unit 1200 may be implemented by using the logic circuit 3001, and the foregoing transceiver unit 1100 may be implemented through the interface 3002. The logic circuit 3001 may be a chip, a processing circuit, an integrated circuit, a system on chip (system on chip, SoC) chip, or the like. The interface 3002 may be a communication interface, an input/output interface, a pin, or the like. For example, FIG. 9 shows an example in which the communication apparatus is a chip. The chip includes the logic circuit 3001 and the interface 3002.

In this embodiment of this application, the logic circuit and the interface may be coupled to each other. A specific connection manner between the logic circuit and the interface is not limited in this embodiment of this application.

It may be understood that the communication apparatus shown in this embodiment of this application may implement the methods provided in embodiments of this application in a form of hardware, or may implement the methods provided in embodiments of this application in a form of software. This is not limited in this embodiment of this application.

An embodiment of this application further provides a wireless communication system. The wireless communication system includes a network device and a terminal device. The network device and the terminal device may be configured to perform the method in any one of the foregoing embodiments.

In addition, this application further provides a computer-readable storage medium. The computer-readable storage medium stores computer code. When the computer code is run on a computer, the computer is caused to perform operations and/or processing performed by the network device and the terminal device in the methods provided in this application.

This application further provides a computer program product. The computer program product includes computer code or a computer program. When the computer code or the computer program is run on a computer, operations and/or processing performed by the network device and the terminal device in the methods provided in this application are/is performed.

In the several embodiments provided in this application, it should be understood that the disclosed system, apparatus, and method may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one place, or may be distributed on a plurality of network units. A part or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such understanding, the technical solutions of this application essentially, or the part contributing to a conventional technology, or all or a part of the technical solutions may be implemented in a form of a software product. The computer software product is stored in a readable storage medium and includes several instructions for instructing a computer device (which may be a personal computer, a server, a network device, or the like) to perform all or a part of the steps of the methods described in embodiments of this application. The readable storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A data transmission method, comprising:

    receiving, by a terminal device, scheduling information from a network device, wherein the scheduling information is used to schedule the terminal device to perform data transmission on a first transmission resource, a frequency domain resource of the first transmission resource is located on an uplink subband of an activated bandwidth part BWP of the terminal device, and the BWP further comprises a downlink subband neighbor to the uplink subband; and

    performing, by the terminal device, data transmission on the first transmission resource based on a first transmitter requirement, wherein the first transmitter requirement is determined based on bandwidth of the uplink subband.

2.  The method according to claim 1, wherein the first transmitter requirement comprises at least one of the following: an in-band emission, an out-of-band emission, or maximum output power reduction, wherein

    the in-band emission is used to limit a ratio of output power generated on a frequency domain resource other than the frequency domain resource of the first transmission resource in the uplink subband to output power generated on the frequency domain resource of the first transmission resource being less than or equal to a first threshold when the terminal device sends data on the first transmission resource;

the out-of-band emission is used to limit output power generated on a frequency domain resource other than the uplink subband being less than or equal to a second threshold when the terminal device sends data on the first transmission resource; and

the maximum output power reduction is used to limit a maximum value of transmit power that is allowed to be reduced, when the terminal device sends data on the uplink subband, from transmit power specified by the network device.

3. The method according to claim 1 or 2, wherein the method further comprises:
sending, by the terminal device, capability information to the network device, wherein the capability information indicates that the terminal device supports the first transmitter requirement.

4. The method according to claim 3, wherein the capability information indicates that the terminal device supports the first transmitter requirement when parameter configuration information for the data transmission meets at least one parameter configuration, wherein
one parameter configuration in the at least one parameter configuration comprises at least one of the following parameters: a waveform for the data transmission, a frequency domain resource allocation parameter for the data transmission, or bandwidth occupied by a guard subband, wherein the guard subband is a guard band between the uplink subband and the downlink subband in the BWP.

5. The method according to claim 4, wherein the frequency domain resource allocation parameter comprises one or more of a first parameter, a frequency domain resource position, and a quantity of frequency domain units, wherein the first parameter indicates whether the frequency domain resource is a consecutive frequency domain resource, the frequency domain resource position is a position of the frequency domain resource on the uplink subband, and the quantity of frequency domain units is a quantity of frequency domain units comprised in the frequency domain resource.

6. The method according to claim 4 or 5, wherein the capability information comprises the at least one parameter configuration.

7. The method according to any one of claims 1 to 6, wherein the scheduling information comprises the parameter configuration information for the data transmission; and
performing, by the terminal device, data transmission on the first transmission resource based on the first transmitter requirement comprises:
when the parameter configuration information meets the at least one parameter configuration, performing, by the terminal device, data transmission on the first transmission resource based on the first transmitter requirement.

8. The method according to any one of claims 4 to 7, wherein the parameter configuration in the at least one parameter configuration corresponds to one candidate value of the first transmitter requirement; and the method further comprises:

determining, by the terminal device, a first value of the first transmitter requirement based on a respective candidate value corresponding to the at least one parameter configuration that the parameter configuration information meets; and
performing, by the terminal device, data transmission on the first transmission resource based on the first transmitter requirement comprises:
performing, by the terminal device, data transmission on the first transmission resource based on the first value of the first transmitter requirement.

9. A data transmission method, comprising:

receiving, by a network device, capability information from a terminal device, wherein the capability information indicates that the terminal device supports a first transmitter requirement, the first transmitter requirement is determined based on bandwidth of an uplink subband of an activated bandwidth part BWP of the terminal device, and the BWP further comprises a downlink subband neighbor to the uplink subband; and
sending, by the network device, scheduling information to the terminal device based on the capability information, wherein the scheduling information is used to schedule the terminal device to perform data transmission on a first transmission resource, and a frequency domain resource of the first transmission resource is located on the uplink subband.

10. A data transmission method, comprising:
sending, by a terminal device, capability information to a network device, wherein the capability information indicates that the terminal device supports a first transmitter requirement, the first transmitter requirement is determined based on bandwidth of an uplink subband of an activated bandwidth part BWP of the terminal device, and the BWP further comprises a downlink subband neighbor to the uplink subband.

11. A communication apparatus, wherein the communication apparatus comprises a unit configured to perform the method according to any one of claims 1 to 8, a unit configured to perform the method according to claim 9, or a unit configured to perform the method according to claim 10.

12. A communication apparatus, comprising a processor, wherein

the processor is coupled to a memory;
the memory is configured to store instructions; and
the processor is configured to execute the instructions, to cause the method according to any one of claims 1 to 8 to be performed;
the processor is configured to execute the instructions, to cause the method according to claim 9 to be performed; or
the processor is configured to execute the instructions, to cause the method according to claim 10 to be performed.

13. A computer-readable storage medium, wherein the computer-readable storage medium is configured to store a computer program, and when the computer program is executed, the method according to any one of claims 1 to 8 is performed; when the computer program is executed, the method according to claim 9 is performed; or when the computer program is executed, the method according to claim 10 is performed.

FIG. 1

FIG. 2a

DL/UL BWP ——

| D | D | D | F | U |

D: Downlink

U: Uplink

F: Flexible

Slot    0   1   2   3   4

FIG. 2b

BWP ——

| D | D | D | F | |
| U | U | U | U | U |
| D | D | D | F | |

D: Downlink

U: Uplink

F: Flexible

Slot    0   1   2   3   4

FIG. 2c

Frequency domain
resource allocated to
a terminal device

Out-of-band
interference

In-band
interference

In-band
interference

Out-of-band
interference

Carrier transmission bandwidth

Carrier channel bandwidth

FIG. 2d

Network
device

Terminal
device

101: Send scheduling information

102: Perform data transmission on a
first transmission resource based on
a first transmitter requirement

FIG. 3

Frequency domain
resource allocated to
a terminal device

Out-of-band
interference

In-band
interference

In-band
interference

Out-of-band
interference

Uplink subband

FIG. 4

```
Network                                          Terminal
device                                            device
  │                                                  │
  │         201: Send capability information         │
  │ ◄──────────────────────────────────────────────  │
  │                                                  │
  │      202: Send scheduling information to          │
  │         the terminal device based on the          │
  │            capability information                 │
  │ ──────────────────────────────────────────────► │
  │                                                  │
  │                                                  │
  │                                                  │
```

FIG. 5

```
Network                                          Terminal
device                                            device
  │                                                  │
  │         301: Send capability information         │
  │ ◄──────────────────────────────────────────────  │
  │                                                  │
  │      302: Send a TDD parameter and an             │
  │      SBFD parameter to the terminal device        │
  │ ──────────────────────────────────────────────► │
  │                                                  │
  │                           ┌─────────────────────┐│
  │                           │303: Determine an SBFD ││
  │                           │ symbol position or an ││
  │                           │ SBFD slot position,   ││
  │                           │and an SBFD subband    ││
  │                           │position based on the  ││
  │                           │TDD parameter and      ││
  │                           │the SBFD parameter     ││
  │                           └─────────────────────┘│
  │         304: Send scheduling information          │
  │ ──────────────────────────────────────────────► │
  │                           ┌─────────────────────┐│
  │                           │305: Determine a       ││
  │                           │transmitter            ││
  │                           │requirement based on   ││
  │                           │the scheduling         ││
  │                           │information            ││
  │                           └─────────────────────┘│
  │    306: Perform data transmission based on        │
  │    the determined transmitter requirement         │
  │ ◄──────────────────────────────────────────────  │
  │                                                  │
```

FIG. 6

1000

Transceiver unit 1100

Processing unit 1200

Communication apparatus

FIG. 7

2000

Transceiver 2100

Processor 2200

2400

Memory 2300

FIG. 8

Chip

Logic circuit 3001

Interface 3002

FIG. 9

## INTERNATIONAL SEARCH REPORT

| International application No. |
| :--- |
| **PCT/CN2024/084173** |

| A. | CLASSIFICATION OF SUBJECT MATTER |
| :--- | :--- |

H04W 72/1268(2023.01)i;  H04W 72/0453(2023.01)i;  H04W 72/23(2023.01)i

According to International Patent Classification (IPC) or to both national classification and IPC

| B. | FIELDS SEARCHED |
| :--- | :--- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 子带全双工, 全双工子带, 带宽部分, 部分带宽, 上行, 子带, 下行, 频段, 功率, 指标, 发射, 带内, 带外, 资源, 调度, 分配, 最大输出功率回退, subband full duplex, SBFD, BWP, UL, DL, bandwidth, power, uplink, downlink, out-of-band, In band, additional spectrum emission mask, allocation, RB

| C. | DOCUMENTS CONSIDERED TO BE RELEVANT |
| :--- | :--- |

| Category* | Citation of document, with indication, where appropriate, of the relevant passages | Relevant to claim No. |
| :---: | :--- | :---: |
| X | CN 115702587 A (QUALCOMM INC.) 14 February 2023 (2023-02-14) description, paragraphs [0007]-[0229] | 1-8, 11-13 |
| X | WO 2023024890 A1 (BEIJING UNISOC COMMUNICATIONS TECHNOLOGY CO., LTD.) 02 March 2023 (2023-03-02) description, page 5, line 2 to page 21, line 12 | 10-13 |
| A | WO 2023024890 A1 (BEIJING UNISOC COMMUNICATIONS TECHNOLOGY CO., LTD.) 02 March 2023 (2023-03-02) description, page 5, line 2 to page 21, line 12 | 9 |
| A | CN 115735385 A (QUALCOMM INC.) 03 March 2023 (2023-03-03) entire document | 1-13 |
| A | WO 2023014089 A1 (SAMSUNG ELECTRONICS CO., LTD.) 09 February 2023 (2023-02-09) entire document | 1-13 |

☐ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
| :--- | :--- | :--- | :--- | :--- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| :--- | :--- |
| **12 June 2024** | **24 June 2024** |

| Name and mailing address of the ISA/CN | Authorized officer |
| :--- | :--- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084173**

| Patent document cited in search report | | | Publication date (day/month/year) | Patent family member(s) | Publication date (day/month/year) |
|---|---|---|---|---|---|
| CN | 115702587 | A | 14 February 2023 | None | |
| WO | 2023024890 | A1 | 02 March 2023 | None | |
| CN | 115735385 | A | 03 March 2023 | None | |
| WO | 2023014089 | A1 | 09 February 2023 | None | |

Form PCT/ISA/210 (patent family annex) (July 2022)

**REFERENCES CITED IN THE DESCRIPTION**

**Patent documents cited in the description**

• CN 202310417506